# EUROPEAN PATENT APPLICATION

(11) **EP 3 567 247 A1**
(43) Date of publication of application: **13.11.2019**
(21) Application number: 18171183.9
(22) Date of filing: 08.05.2018
(51) Int. Cl.: F03D 80/80, H01R 39/64

(54) **ELECTRICAL CONNECTOR FOR A WIND TURBINE**

(71) Applicant: Siemens Gamesa Renewable Energy A/S, 7330 Brande (DK)
(72) Inventor: Soerensen, Peter Hessellund, 8740 Brædstrup (DK)
(74) Representative: Aspacher, Karl-Georg

(57) **Abstract**

An electrical connector (100) for a wind turbine (1) has a rotational axis (X) and comprises:
at least a container (110, 150) comprising at least an inner surface (111, 151) made of conductive material,
a granular or fluid conductive compound (120) house in the at least one first container (110, 150), the granular or fluid conductive compound (120) being in electrical contact with the at least one first inner surface (111, 151),
at least a first conductive element (130) in electrical contact with the granular or fluid conductive compound (120), the first conductive element (130) being mechanically connected with the at least one first container (110, 150) in such a way that the at least one first container (110, 150) and the first conductive element (130) can be rotated with respect to each another around the rotational axis (X) of the electrical connector (100).

## Description

### Field of invention

The present invention relates to the technical field of electrical connectors. Specifically, the present invention relates to an electrical connector to be provided in an apparatus for transferring electrical power or data signals between a stationary component and a rotary component of the apparatus. In particular, such apparatus may be a wind turbine.

### Art Background

A wind turbine commonly comprises a rotating hub, provided with one or more blades, a nacelle and a tower. The hub is typically attached so as to be rotatable with respect to the nacelle, around a rotational axis. The nacelle is ordinarily arranged on top of the tower. In between the tower and the nacelle there is provided a yaw angle adjustment device, which is capable of rotating the nacelle around a vertical yaw axis.
An electric generator is usually provided in the nacelle of the wind turbine. The electric generator comprises a stator, which is fixed to the nacelle, and a rotor, which is mechanically connected to the rotating hub.
The wind interacts with the blades and rotates the hub with respect to the nacelle, around the rotational axis. The rotational energy is transferred from the hub to the rotor and is transformed into electrical energy in the electric generator. In the above described technical field, it is commonly required to transfer electrical power or data signals between relatively rotating components, for example between the tower and the nacelle or between the nacelle and the hub or between the nacelle and the rotor of the generator.

Using cables being twisted or sliding rings for transferring electrical power or data signals is commonly known.
Such devices are however associated with a plurality of inconveniences.

Transferring electrical power through a rotating interface is mechanically challenging. When using cables the cables twist around each other and this shortens the cables. To avoid strain in the cables a cable loop is used and this further contributes to the complexity of the system. To prevent the cables from breaking it may be necessary to periodically unwind the cables, for example by turning the nacelle with respect to the tower. Another solution is using sliding rings, which are however expensive.

Therefore, there is still a need for providing an electrical connector, in particular for a wind turbine, which may avoid the complexity, cost and wear problems described above with reference to the prior art.

### Summary of the Invention

This need may be met by the subject matter according to the independent claim. Advantageous embodiments of the present invention are described in the dependent claims.

According to the invention an electrical connector for a wind turbine is provided. The electrical connector has a rotational axis and comprises:
at least a first container comprising at least a first inner surface made of conductive material,
a granular or fluid conductive compound housed in the at least one container, the granular or fluid conductive compound being in electrical contact with the at least one inner surface,
at least a first conductive element in electrical contact with the granular or fluid conductive compound, the first conductive element being mechanically connected with the at least one container in such a way that the at least one container and the first conductive element can be rotated with respect to each another around the rotational axis of the electrical connector.

According to an embodiment of the present invention, the at least one first container comprises a first outer surface made of insulating material, the first outer surface being shaped and oriented in such a way that the at least one first conductive element and the granular or fluid conductive compound housed in the at least one first container are electrically isolated from an outside of the at least one container. The electrical connector may further comprise:
at least a second container comprising at least a second inner surface made of conductive material, the at least one second container housing at least partially the first container, the granular or fluid conductive compound being interposed between the at least one second inner surface and the first outer surface, the first and the at least one second container being fixed with respect to each other,
at least a second conductive element in electrical contact with the granular or fluid conductive compound housed in the at least one second container, the second conductive element being mechanically connected with the at least one second container in such a way that the at least one second container and the second conductive element can be rotated with respect to one another around the rotational axis of the electrical connector.
In such embodiment the first container and the first conductive element may be connected to a first electric phase of the wind turbine, while the second container and the second conductive element may be connected to a second electric phase of the wind turbine.

According to another embodiment of the present invention, the electrical connector comprises a first plurality of N containers and a second plurality of N respective conductive elements, wherein:
the (N-1)th container comprises a (N-1)th outer surface made of insulating material, the (N-1)th outer surface being shaped and oriented in such a way that the (N-1)th conductive element and the granular or fluid conductive compound housed in the (N-1)th container are electrically isolated from an outside of the (N-1)th container,
the Nth container comprises at least an Nth inner surface made of conductive material, the Nth container housing at least partially the (N-1)th container, the granular or fluid conductive compound being interposed between the Nth inner surface and the (N-1)th outer surface, the first plurality of N containers being fixed with respect to one other,
the Nth conductive element is in electrical contact with the granular or fluid conductive compound housed in the Nth second container, the Nth conductive element being mechanically connected with the Nth container in such a way that the Nth container and the Nth conductive element can be rotated with respect to one another around the rotational axis of the electrical connector.
In such embodiment the Nth container and the Nth conductive element may be connected to a same Nth electric phase.

All the above described embodiment of the present invention permit to achieve, with respect to the prior art, a plurality of advantages, which are:
- reduction of costs,
- greater simplicity,
- infinite number of the possible turns, i.e. there is no need in the electrical connector of the present invention of periodically unwinding the cables,
- less wear,
- greater mechanical stability,
- less space required for the installation of the connector,
- easier to test and validate.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including one or more electrical connectors according to the present invention.
- Figure 2: shows a schematic sectional view of a first embodiment of an electrical connector according to the present invention.
- Figure 3: shows a schematic sectional view of a second embodiment of an electrical connector according to the present invention.

### Detailed Description

The illustrations in the drawings are schematic. It is noted that in different figures, similar or identical elements are provided with the same reference signs.

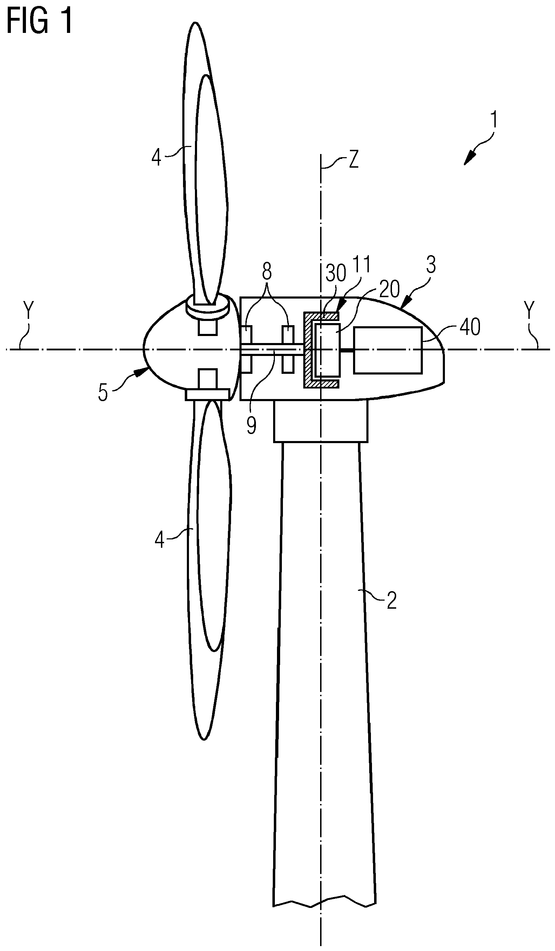

**Figure 1** shows a wind turbine 1 according to the invention. The wind turbine 1 comprises a tower 2, which is mounted on a non-depicted foundation. A nacelle 3 is arranged on top of the tower 2. In between the tower 2 and the nacelle 3 there is provided a yaw angle adjustment device, which is capable of rotating the nacelle around a vertical yaw axis Z.
The wind turbine 1 further comprises a hub5 having at least one blade 4 (in the embodiment of Figure 1, the hub comprises three blades 4, of which only two blades 4 are visible). The hub5 is rotatable around a rotational axis Y.
The blades 4 extend substantially radially with respect to the rotational axis Y.
In general, when not differently specified, the terms axial, radial and circumferential in the following are made with reference to the rotational axis Y.

The wind turbine 1 comprises an electric generator 11, including a stator 20 and a rotor 30. The rotor 30 is rotatable with respect to the stator 20 about the rotational axis Y. The hub5 is rotationally coupled with the electric generator 11 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y.
In the wind turbine 1 one or more rotating electrical connector 100, as better describe in the following is provided. The electrical connector 100 is installable in a plurality of positions, in particular in the tower 2 or in the nacelle 3, for transferring electrical power or data signals between relatively rotating components, for example between the tower 2 and the nacelle 3 or between the nacelle 3 and the hub 5 or between the nacelle 3 and the rotor 30.

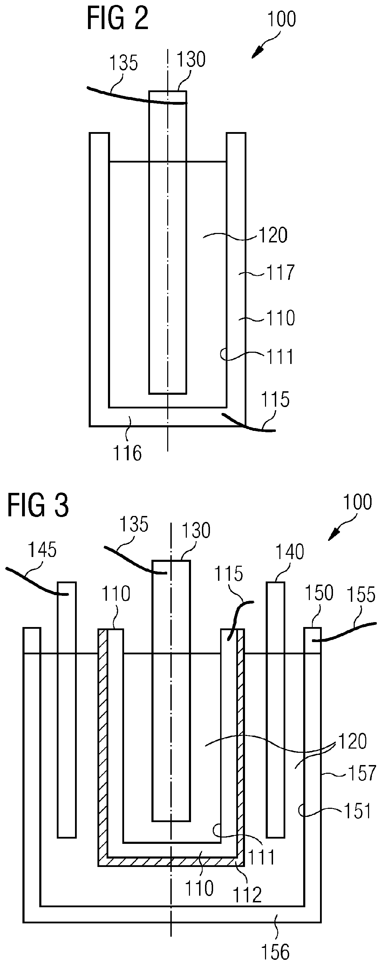

**Figure 2** shows a first embodiment of an electrical connector 100 included in the wind turbine 1. The electrical connector 100 has a rotational axis X and comprises:
a first container 110 made of conductive material, in particular comprising a first inner surface 111 made of conductive material,
a granular or fluid conductive compound 120 housed in the first container 110, the granular or fluid conductive compound 120 being in electrical contact with the first inner surface 111,
a first conductive element 130 in electrical contact with the granular or fluid conductive compound 120.
The first conductive element 130 is mechanically connected with the first container 110 in such a way that the first container 110 and the first conductive element 130 can be rotated with respect to each another around the rotational axis X of the electrical connector 100.
The granular or fluid conductive compound 120 provides the electrical contacts between the first container 110 and the first conductive element 130, i.e. the two components of the first conductive element 130 which are rotatable with respect to each other around the rotational axis X.
The granular or fluid conductive compound 120 may comprise graphite powder. Graphite powder provided for a particularly cheap solution of granular conductive compound 120.
In general, other type of granular or fluid conductive compound 120 may be used, for example mercury, provided that they are able to conveniently provide the electrical contacts between the first container 110 and the first conductive element 130.
The first conductive element 130 is a conductive rod having a longitudinal axis coincident with the rotational axis X.
The first container 110 and is cylindrical in shape and comprises a first circular base 116 orthogonal to the rotational axis X and a first and lateral cylindrical surface 117 coaxial with the rotational axis X.
The electrical connector 100 further comprises two electrical connectors 115, 135 for electrically connecting the first container 110 and the first conductive element 130 to respective components of the wind turbine 1, which are rotatable with respect to each other. The electrical contact established through the electrical connector 100 is usable for transferring electrical power or data signals between relatively rotating components of the wind turbine 1.
According to a possible embodiment of the present invention, the two electrical connectors 115, 135 may be connected to the tower 2 and the nacelle 3, respectively.
Alternatively, the two electrical connectors 115, 135 may be connected to the nacelle 3 and the tower 2, respectively. According to a possible embodiment of the present invention, the two electrical connectors 115, 135 may be connected to the nacelle 3 and the hub 5, respectively. Alternatively, the two electrical connectors 115, 135 may be connected to the tower 2 and nacelle 3, respectively.
According to a possible embodiment of the present invention, the two electrical connectors 115, 135 may be connected to the nacelle 3 and the rotor 30, respectively. Alternatively, the two electrical connectors 115, 135 may be connected to the rotor 30 and the nacelle 3, respectively.
In the embodiment of **Figure 2** the two electrical connectors 115, 135 belong to the same electrical phase.

**Figure 3** shows a second embodiment of the electrical connector 100 included in the wind turbine 1 for the connection with two different phases. In this second embodiment, the above description of the first container 110, the granular or fluid conductive compound 120, the first conductive element 130 and the electrical connectors 115, 135 are still valid. In particular, the electrical connectors 115, 135 are usable for connecting electrical connector 100 to a first electrical phase of the wind turbine 1.
The description which follows specifically refers to the embodiment of figure 2.
The first container 110 comprises a first cylindrical outer surface 112 made of insulating material. The first outer surface 112 electrically isolates the first conductive element 130 and the granular or fluid conductive compound 120 housed in the first container 110 from an outside of the first container 110.
The electrical connector 100 further comprises a second container 150 comprising a second inner surface 151 made of conductive material. The second container 150 houses at least partially the first container 151 and a portion of the granular or fluid conductive compound 120, which is interposed between the second inner surface 151 and the first outer surface 112 of the first container 110. The first and the second container 150 are fixed with respect to each other; in particular as far as the rotation around the rotational axis X is concerned.
The electrical connector 100 further comprises a second conductive element 140 in electrical contact with the granular or fluid conductive compound 120 housed in the at least one second container 150, the second conductive element 140 being mechanically connected with the second container 150 in such a way that the second container 150 and the second conductive element 140 can be rotated with respect to one another around the rotational axis X of the electrical connector 100. The second conductive element 140 is distanced from both the first and the second container 110, 150.
The second container 150 is cylindrical in shape and comprises a respective second circular base 156 orthogonal to the rotational axis X and a respective second lateral cylindrical surface 157 coaxial with the rotational axis X.
The second conductive element 140 is cylindrical in shape,
comprising a cylindrical wall coaxial with the rotational axis X. The second conductive element 140 is interposed between the first lateral cylindrical surface 117 and the second lateral cylindrical surface 157.
The electrical connector 100 comprises further electrical connectors 145, 155 for electrically connecting the second container 150 and the second conductive element 140 to respective components of the wind turbine 1, which are rotatable with respect to each other. The two further electrical connectors 145, 155 belong to a second electrical phase of the wind turbine 1.
Typically, the first container and the second container 110, 150 are connected to the same components of the wind turbine 1, for example the tower 2, while the first and the second conductive elements 130, 140 are both connected to another components of the wind turbine 1, for example the nacelle 3.

According to other embodiments of the present invention (not shown), the electrical connector 100 is connectable to a plurality of N (N>2) phases of the wind turbine 1. In these embodiments, the electrical connector 100 comprises a first plurality of N containers and a second plurality of respective N conductive elements, wherein:
the (N-1)th container comprises a (N-1)th outer surface made of insulating material, the (N-1)th outer surface being shaped and oriented in such a way that the (N-1)th conductive element and the granular or fluid conductive compound 120 housed in the (N-1)th container are electrically isolated from an outside of the (N-1)th container,
the Nth container comprises at least an Nth inner surface made of conductive material, the Nth container housing at least partially the (N-1)th container, the granular or fluid conductive compound 120 being interposed between the Nth inner surface and the (N-1)th outer surface, the first plurality of containers being fixed with respect to one other,
the Nth conductive element is in electrical contact with the granular or fluid conductive compound 120 housed in the Nth second container, the Nth conductive element being mechanically connected with the Nth container in such a way that the Nth container and the Nth conductive element can be rotated with respect to one another around the rotational axis X of the electrical connector 100.
Two electrical connectors for electrically connect the Nth container and the Nth conductive element to a same Nth electric phase.
The embodiment of Figure 3 can be considered one of the embodiments above described when N=2.

## Claims

1. Electrical connector (100) for a wind turbine (1) having a rotational axis (X) and comprising:
at least a first container (110, 150) comprising at least a first inner surface (111, 151) made of conductive material,
a granular or fluid conductive compound (120) housed in the at least one first container (110, 150), the granular or fluid conductive compound (120) being in electrical contact with the at least one first inner surface (111, 151),
at least a first conductive element (130) in electrical contact with the granular or fluid conductive compound (120), the first conductive element (130) being mechanically connected with the at least one first container (110, 150) in such a way that the at least one first container (110, 150) and the first conductive element (130) can be rotated with respect to each another around the rotational axis (X) of the electrical connector (100).

2. Electrical connector (100) as claimed in claim 1, wherein the at least one first container (110) comprises a first outer surface (112) made of insulating material, the first outer surface (112) being shaped and oriented in such a way that the at least one first conductive element (130) and the granular or fluid conductive compound (120) housed in the at least one first container (110) are electrically isolated from an outside of the at least one first container (110).

3. Electrical connector (100) as claimed in claim 2, wherein the electrical connector (100) further comprises:
at least a second container (150) comprising at least a second inner surface (151) made of conductive material, the at least one second container (150) housing at least partially the first container (151), the granular or fluid conductive compound (120) being interposed between the at least one second inner surface (151) and the first outer surface (112), the first and the at least one second container (150) being fixed with respect to each other,
at least a second conductive element (140) in electrical contact with the granular or fluid conductive compound (120) housed in the at least one second container (150), the second conductive element (140) being mechanically connected with the at least one second container (150) in such a way that the at least one second container (150) and the second conductive element (140) can be rotated with respect to one another around the rotational axis (X) of the electrical connector (100).

4. Electrical connector (100) as claimed in claim 2, wherein the electrical connector (100) comprises a first plurality (N) of containers (110, 150) and a second plurality (N) of respective conductive elements (130, 140), wherein:
the (N-1)th container (110) comprises a (N-1)th outer surface (112) made of insulating material, the (N-1)th outer surface (112) being shaped and oriented in such a way that the (N-1)th conductive element (130) and the granular or fluid conductive compound (120) housed in the (N-1)th container (110) are electrically isolated from an outside of the (N-1)th container (110),
the Nth container (150) comprises at least an Nth inner surface (151) made of conductive material, the Nth container (150) housing at least partially the (N-1)th container (151), the granular or fluid conductive compound (120) being interposed between the Nth inner surface (151) and the (N-1)th outer surface (112), the first plurality (N) of containers (110, 150) being fixed with respect to one other,
the Nth conductive element (140) is in electrical contact with the granular or fluid conductive compound (120) housed in the Nth second container (150), the Nth conductive element (140) being mechanically connected with the Nth container (150) in such a way that the Nth container (150) and the Nth conductive element (140) can be rotated with respect to one another around the rotational axis (X) of the electrical connector (100).

5. Electrical connector (100) as claimed in claim 4, wherein the electrical connector (100) further comprises a plurality of electrical connectors (115, 135, 145, 155) for electrically connecting the Nth container (110, 150) and the Nth conductive element (130, 140) to a same Nth electric phase.

6. Electrical connector (100) as claimed in any of the previous claims, wherein the first conductive element (130) is a conductive rod having a longitudinal axis coincident with the rotational axis (X).

7. Electrical connector (100) as claimed in any of the previous claims, wherein the first container (110) and the second container (150) are cylindrical in shape and comprises a respective first and second circular base (116, 156) orthogonal to the rotational axis (X) and a respective first and second lateral cylindrical surface (117, 157) coaxial with the rotational axis (X).

8. Electrical connector (100) as claimed in any of the claims 3 to 6, wherein the second conductive element (140) is cylindrical in shape and is coaxial with the rotational axis (X).

9. Electrical connector (100) as claimed in any of the previous claims, wherein the granular or fluid conductive compound (120) comprises graphite powder.

10. Wind turbine (1) including an electrical connector (100) according to any of the previous claims.
